# EUROPEAN PATENT APPLICATION

(11) **EP 4 258 215 A1**
(43) Date of publication of application: **11.10.2023**
(21) Application number: 22181761.2
(22) Date of filing: 29.06.2022
(51) Int. Cl.: G06T 11/00

(54) **DEVICE-LESS MOTION STATE ESTIMATION**

(30) Priority: 06.04.2022 US 202263327831 P
(71) Applicant: Koninklijke Philips N.V., 5656 AG Eindhoven (NL)
(72) Inventor: KABUS, Sven, Eindhoven (NL); PERKINS, Amy, Eindhoven (NL); KRUIS, Matthijs Ferdinand, 5656AG Eindhoven (NL); BIPPUS, Rolf-Dieter, 5656AG Eindhoven (NL)
(74) Representative: Philips Intellectual Property & Standards

(57) **Abstract**

A method and a system for reconstructing a CT image of a subject are provided, as well as an imaging arrangement for acquiring a CT image, and a computer program for carrying out the method. The method for reconstructing the CT image comprises receiving projection image data, selecting consecutive portions of data, and reconstructing each of the portions into a volumetric slab image to form a sequence of images. The method also comprises extracting a motion function from the sequence by registering each slab image to another slab image separated in the sequence by a separation parameter to obtain a difference metric, selecting a sequence of difference metrics, and forming a motion function using the selected sequence. The method further comprises identifying trigger points in the motion function to define motion states, grouping the projection image data into these motion states, and reconstructing a volumetric image for each motion state.

## Description

### FIELD OF THE INVENTION

The invention generally relates to medical image reconstruction. In particular, but not exclusively, the invention relates to motion compensation in computed tomography image reconstruction.

### BACKGROUND OF THE INVENTION

In medical imaging, techniques such as computed tomography (CT) are used to visualize patient anatomy. A CT imaging system generally includes a source of radiation such as x-ray radiation mounted on a rotatable gantry opposite a detector array including one or more rows of detector pixels. The x-ray source rotates around an examination region located between the x-ray tube and the detector array and emits radiation that traverses the examination region and a subject disposed therein. The detector array detects radiation that traverses the examination region and generates projection data indicative of the examination region and the object or subject disposed therein. The projection data is reconstructed to generate volumetric image data indicative of subject. The volumetric image data can be
processed to generate one or more images that include the scanned portion of the subject.

4D-CT imaging is routinely used in radiation oncology. In 4D-CT imaging, a series of 3D volumetric images of the subject are acquired of a period of time. This type of imaging can support visualization of the motion of patient anatomy. This is particularly helpful when a region of interest, such as a tumor, is subject to regular and involuntary motion such as respiratory and cardiac motion. On the basis of a respiratory-phase based gating, the motion of a lung tumor can be followed over respiratory time.

For 4D-CT imaging, data acquisition takes several minutes. During this time, involuntary regular motion such as respiratory motion will take place. Patients cannot hold their breath for this time period and are therefore allowed to breathe freely or are required to follow a breathing protocol. In order to obtain sufficient image quality, data for corresponding motion states are combined into groups for image reconstruction. These groups are also commonly referred to as "gates" or "bins". In order to define the bins, a motion signal needs to be measured during image acquisition.

The most common way to measure the respiratory signal throughout the image acquisition is to use a belt that is mounted onto the patient's thorax or abdomen. The belt attaches a pressure sensor to the patient. Pressure variations are caused by abdominal movements and these are considered to be representative of the breathing signal. However, such a belt is uncomfortable to the patient.

An alternative option to the use of a pressure belt, is to place a marker block on the patient's torso and monitor its movement with a camera-based system. However, a camera-based system requires an unobstructed line of sight to the marker, which is in practice not always available.

Both of these approaches to measure respiratory motion moreover have the disadvantage that additional hardware, setup, calibration and disinfection after use is required. This adds to the complexity of the imaging workflow and makes their use expensive and sensitive to errors.

### SUMMARY OF THE INVENTION

The current invention seeks to provide an approach for 4D-CT image reconstruction that does not require the separate measurement of a motion signal.

Thereto a method and a system for reconstructing a computed tomography image of a subject are provided, as well as an imaging arrangement for acquiring a computed tomography image of a subject, and a computer program for carrying out the method.

The method for reconstructing a computed tomography image of a subject comprises receiving projection image data of the subject, selecting consecutive portions of the projection image data, and reconstructing each of the selected portions into a volumetric slab image to form a sequence of slab images. The method also comprises extracting a motion function from the sequence of slab images by, for each of the slab images in the sequence, registering the slab image to at least one other slab image separated in the sequence from the slab image by a separation parameter to obtain at least one difference metric, selecting a sequence of difference metrics from the obtained difference metrics for the sequence of slab images, and forming a motion function using the selected sequence of difference metrics. The method further comprises identifying at least one trigger point in the motion function to define motion states, grouping the projection image data into the defined motion states; and reconstructing the grouped projection data into a volumetric image of the subject for each defined motion state. The method is preferably computer-implemented or implemented by other suitable calculation means.

In an embodiment of the method, extracting the motion function from the sequence of slab images, identifying the at least one trigger point and grouping the projection image data into the defined motion states takes place at least partly simultaneously with receiving the projection data. This has the advantage that image reconstruction can start during image acquisition without the need to wait for the full CT scan to complete.

Preferably, the volumetric slab images are reconstructed at a lower resolution than the volumetric images for the motion states. A lower image quality can be sufficient for extracting the motion function and allows for faster and more efficient reconstruction of the slab images.

According to one aspect, the motion function is formed by fitting a periodic function to the selected sequence of difference metrics. Fitting a periodic function to the sequence of difference metrics results in a smooth and regular motion function. For example, the cos^4(x) function provides a good approximation of human breathing motion.

According to another, alternative aspect, forming the motion function comprises analyzing and correcting for outliers. For example, when the subject is coughing, this can cause a large disruption in the motion function. Such an outlier can be identified by analyzing the selected sequence of difference metrics or by analyzing an initially calculated motion function. Optionally, corresponding groups of image projection data can be removed to correct the motion function and improve the quality of the reconstructed image.

In an alternative or additional option, the separation parameter has at least one pre-set value. Using one pre-set value allows for fast and robust extraction of the motion function. When one pre-set value for the separation parameter is used, a single sequence of difference metrics is obtained for the sequence of slabs. This sequence is automatically selected as the sequence of difference metrics. In a further option, the separation parameter has two or more pre-set values. When two or more pre-set values are used, an optimal value for the separation value can be used for each slab image to select the sequence of difference metrics. Alternatively, when two or more pre-set values are used, the sequence of difference metrics can be selected using majority voting.

Registering the slab images may comprise applying one or more of: an elastic deformation, and a rigid deformation. Preferably, a rigid deformation such as a translation and/or a rotation, is applied. Applying a rigid deformation can be of sufficient quality, requires less computation and is more robust.

In an embodiment, the difference metric indicates the amount and/or direction of movement of a region of interest. This has the advantage of providing improved image quality for the motion states of the actual region of interest itself.

Preferably, the projection image data of the subject is received from one or more of: a computed tomography imaging apparatus, an imaging data storage device, and database such as a dedicated imaging data storage database, hospital database or patient record database.

The system for reconstructing a computed tomography image of a subject comprises an input configured to receive projection image data of the subject, a slab image reconstructor, a motion extraction unit, and further a reconstruction processor. The slab image reconstructor is configured to select consecutive portions of the projection image data and reconstruct each of the selected portions into a volumetric slab image to form a sequence of slab images. The motion function extraction unit is configured to, for each of the slab images in the sequence, register the slab image to at least one other slab image separated in the sequence from the slab image by a separation parameter to obtain at least one difference metric, select a sequence of difference metrics from the obtained difference metrics for the sequence of slab images, and form a motion function using the selected sequence of difference metrics. The reconstruction processor is configured to identify at least one trigger point in the motion function to define motion states, group the projection data into the defined motion states, and reconstruct the grouped projection data into a volumetric image of the subject for each defined motion state. Preferably, the system further comprises a display for displaying at least one of the volumetric images. Displaying the image can assist the physician in diagnosing the patient and preparing a treatment plan.

In an embodiment, the system further comprises a user interface configured to display the obtained difference metrics calculated for at least one separation parameter to a user, and preferably also configured to allow the user to select at least one of: a sequence of difference metrics and a value for the separation parameter.

The arrangement for acquiring a computed tomography image of a subject comprises a computed tomography imaging apparatus for acquiring projection image data of the subject and the above-described system for reconstructing the computed tomography image of the subject.

The computer program product comprises instructions that cause a processor to carry out the above described method, when the computer program is executed.

An advantage of the current invention is that a 4D-CT image is obtained, without the need to acquire a regular motion signal from the subject. In particular, it is no longer needed to use belts and other instrumentation to measure respiratory and/or cardiac motion. Such devices may increase procedure complexity and cause patient discomfort.

Another advantage is that a motion signal can be determined more accurately. The current invention can determine the motion directly for the anatomical region of interest. When an external device such as a belt-device are used, the detected respiratory phase at the scanned axial position can be different from the axial position where the belt is located.

### BRIEF DESCRIPTION OF THE FIGURES

In the following drawings:
Figure 1 schematically and exemplarity illustrates an arrangement for acquiring a CT image of a subject comprising a system for reconstructing the CT image of the subject.
Figure 2 schematically illustrates projection data acquisition and reconstruction of volumetric slab images.
Figure 3 schematically illustrates an example of a method for reconstructing a computed tomography image of a subject.
Figure 4 schematically illustrates an example of the method steps for extracting a motion function from a sequence of slab images.
Figures 5 schematically illustrates another example of the method steps for extracting a motion function from a sequence of slab images.
Figure 6 schematically illustrates an example of a user interface which is configured to allow a user to select at least one value for the separation parameter.

### DETAILED DESCRIPTION OF THE INVENTION

In the examples below, a computed tomography image is acquired for a subject. Such a subject can be a human being, particularly a human patient requiring imaging for medical purposes. However, alternative subjects are also envisaged, for example animals such as pets or livestock. The approach according to the invention can also be applied to inanimate object having intrinsic periodic motion that cannot be paused during image acquisition.

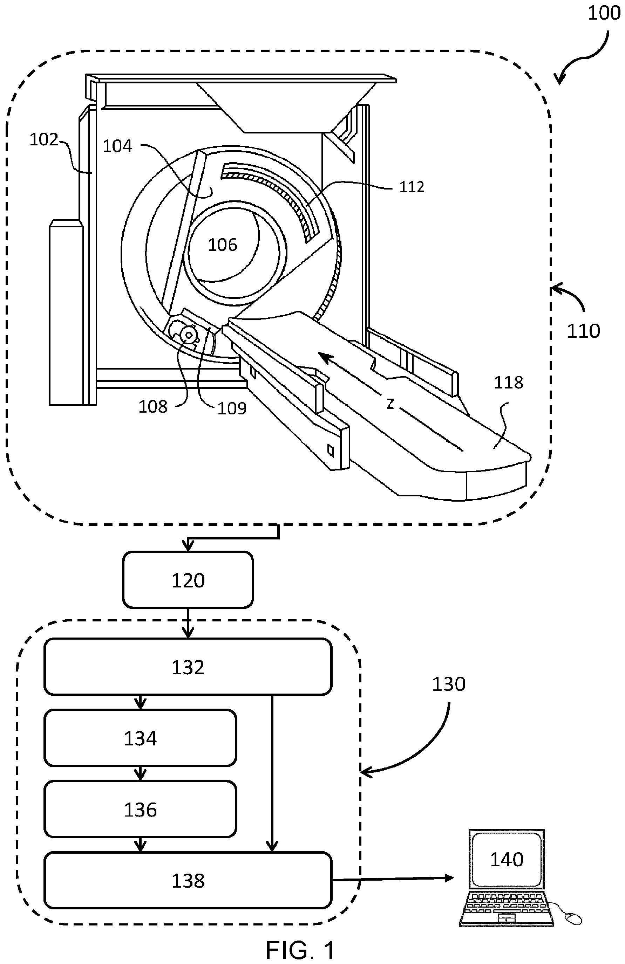

Figure 1 illustrates an imaging arrangement 100 for acquiring a computed tomography image of a subject.

The imaging arrangement 100 comprises an imaging apparatus 110 such as a computed tomography (CT) scanner. The computed tomography imaging apparatus 110 includes a stationary gantry 102 and a rotating gantry 104, which is rotatably supported by the stationary gantry 102. When the system is in operation, the rotating gantry 104 rotates around an examination region 106 about a longitudinal or z-axis. A radiation source 108, such as an x-ray tube, is supported by and rotates with the rotating gantry 104 and emits radiation that traverses the examination region 106. A source collimator 109 collimates the emitted radiation to form a generally fan, wedge, or cone shaped radiation that traverses the examination region 106.

A support 118, such as a couch is provided to support an object or subject to be imaged in the examination region 106. The support 118 is movable along the z-axis in coordination with the rotation of the rotating gantry 104 to facilitate the desired scanning trajectory, preferably a helical scanning trajectory.

A radiation sensitive detector array 112 detects radiation emitted by the radiation source 108 that traverses the examination region 106 and generates projection image data 120 indicative of the detected radiation. The illustrated radiation sensitive detector array 112 includes one or more rows of radiation sensitive photosensor pixels along the z-axis.

The imaging arrangement 100 further comprises an image reconstruction system 130, which reconstructs the projection data and generates volumetric image data indicative of the examination region 106, including structure of an object or subject disposed therein. One or more images can be generated from the volumetric image data. In this example, the imaging arrangement 100 also comprises an optional display 140, for displaying the one or more generated images.

The system for reconstructing CT image 130 comprises an input 132 for receiving the projection image data 120 of the subject, a slab image reconstructor 134, a motion extraction unit 136, and further a reconstruction processor 138.

The input 132 is configured to receive the projection image data 120 directly from the CT imaging apparatus 110 during or after the data is acquired. Alternatively, the projection data 120 can be stored by an imaging data storage device, or a database such as a dedicated imaging data storage database, hospital database or patient record database. In this option the reconstruction system 130 can operate independently from the imaging apparatus 110 and the input is configured to receive the data from the data storage device or database.

The slab image reconstructor 134 is configured to select consecutive portions of the projection image data 120 and reconstruct each of the selected portions into a volumetric slab image to form a sequence of slab images. The motion function extraction unit 136 is configured to, for each of the slab images in the sequence, register the slab image to at least one other slab image separated in the sequence from the slab image by a separation parameter to obtain at least one difference metric, select a sequence of difference metrics from the obtained difference metrics for the sequence of slab images, and form a motion function using the selected sequence of difference metrics.

The reconstruction processor 138 is configured to identify at least one trigger point in the extracted motion function to define motion states, group the projection data into the defined motion states, and reconstruct the grouped projection data into a volumetric image of the subject for each defined motion state. For breathing motion, triggers points can for example be the end-exhale state, end-inhale state and mid-exhale and mid-inhale states. For a 4D-CT image, preferably at least one, and more preferably at least two trigger points are selected to show motion of a region of interest in the patient at the different motion phases.

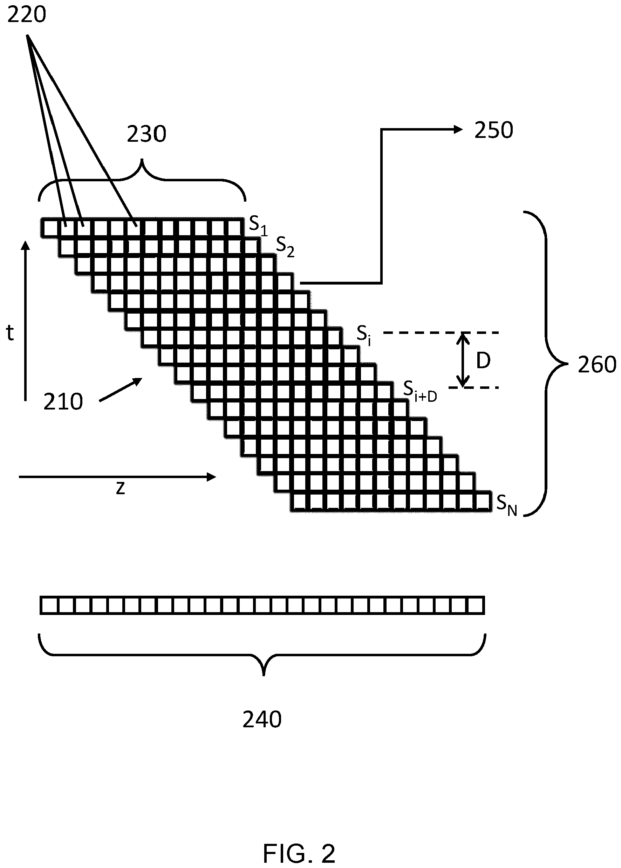

Figure 2 schematically illustrates projection data acquisition and volumetric image reconstruction of a CT image. Data is acquired as the subject moves through the imaging apparatus on the support. A commonly used way to do this is by means of a helical scanning trajectory. In a helical scanning trajectory the support moves the subject through the examination region in a continuous manner while the radiation source and detector array rotate around the subject. Alternatively, the movement of the table can be stopped at each scanning position and the radiation source and detector array then rotate around with the subject in a stationary position. Such a step-and-shoot approach, however, is more cumbersome to execute and less comfortable for the subject. In Figure 2, the couch position z is shown on the horizontal axis as a distance relative to the end of the support. Time t is shown on the vertical axis and increases in the upwards direction.

Projection data is collected in portions of angular rotation of the source and detector around the subject. When the most prominent subject motion that needs to be compensated for is respiratory motion, such a portion is preferably at least 180°. Having portions of data of at least 180° has the advantage that each portion can be selected and reconstructed into an image of sufficient quality to display to a user. However, having portions of this degree of rotation is not essential to the current reconstruction approach. When a higher timing resolution is required, for example when the most prominent subject motion that needs to be compensated for is cardiac motion, the portions can also be less than 180°. The portions of projection data can be adjacent in acquisition angle, but can also partially overlap. Such a portion of projection data represents the data acquired for the subject at a certain couch position and moment in the acquisition time. Alternatively, the portions of projection data can be defined using a time window within the acquisition time span or a time window covering an average position of the support.

Figure 2 shows a grid of volumetric image data 210 that is divided into slices 220. As explained with reference to Figure 1, the radiation sensitive detector array of the imaging has one or more rows of photosensitive pixels along the z-axis. Each pixel acquires projection data as the detector rotates around the subject and when a predefined rotation of preferably more than 180° has been completed, this data can be reconstructed into a 2D cross sectional volumetric image of the subject. This image is referred to as a slice 220. The adjacent pixels of the array each provide an adjacent slice. The field of view 230 of the detector is mainly determined by the number of pixels spanning the length of the examination region. The total coverage of the subject in the CT image 240 is increased by moving the support and acquiring data at subsequent positions of the support. Preferably, multiple slices of data are acquired for each position of the subject support. This manner of data acquisition is referred to as oversampled image acquisition. Acquiring more slices per bed position improves image quality, but also requires a slower speed of the support for the subject and increases the acquisition time. In practice, therefore a trade-off is made between the amount of projection data that is acquired and the scan speed.

From the portions of projection image data that are acquired, each can be selected and reconstructed into a separate volumetric image. This 3D CT image is a volumetric slab image 250. The slab image is a volumetric image of the subject for the selected couch position and moment in the acquisition time. In Figure 2, the slab images are shown as rows of slices 220. The slabs here are illustrated as being adjacent in time, but alternatively they can also partially overlap or a time gap may be left inbetween.

The volumetric slab images form a sequence 260 of 3D images in time. The time sequence starts at the first slab image S₁, followed by the second slab image S₂, and so on until the final slab image S_{N}. The total number of slab images N illustrated in the schematic of Figure 2 is 16, but in practice this will typically be more. The total number of slab images is determined by the detector width of the CT imaging apparatus, imaging parameters such as rotation speed of the detector, translation speed of the couch and the field of view 240 that is required.

Consecutive slabs Sᵢ and S_{i+D} are separated in the sequence by separation parameter D. In the example illustrated in Figure 2, the separation parameter D has a value of 4, but it can have any integer value starting from 1. However, in practice, there is an upper limit to the values that can be used for the separation parameter. For slab images Sᵢ and S_{i+D} to be registered, a spatial overlap in the transport direction z is required. This constraint determines the upper boundary for D. Preferably the region of interest for which the motion function is extracted should be at least partially present in both images. When all slab images sufficiently overlap, in principle an upper boundary of N-1 is possible for D. However, in practice, the maximum value for D that will yield a motion function of sufficient quality for 4D-CT image reconstruction will depend on the frequency of the motion of the subject. This will be substantially less than N, for example lower than N/10, or even lower than N/20.

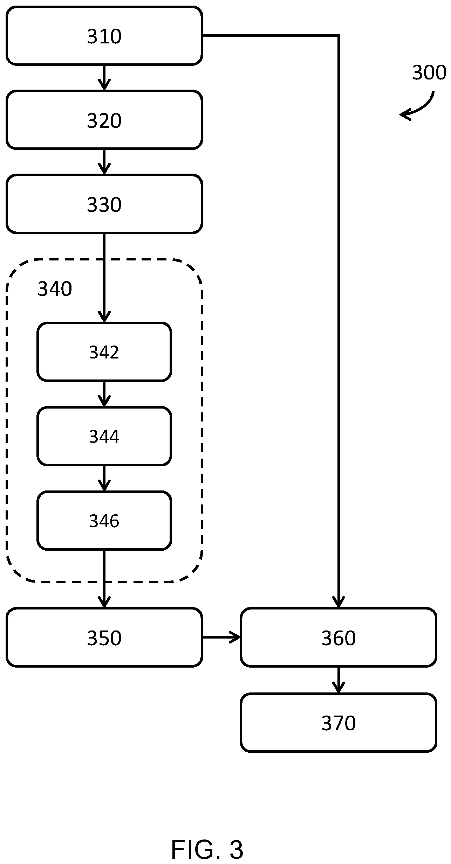

Figure 3 schematically illustrates an example of a method for reconstructing a computed tomography image 300 of a subject. The method for reconstructing the CT image starts with receiving projection image data 310 of the subject. This data can, for example, be received from a computed tomography imaging apparatus, an imaging data storage device, or a database such as a dedicated imaging data storage database, hospital database or patient record database. Next, consecutive portions of the projection image data are selected 320. In the following step, each of the selected portions of image projection data is reconstructed into a volumetric slab image to form a sequence of slab images 330.

The volumetric slab images can be reconstructed to the same resolution as the volumetric images for the motion states provided by the method, but this is not necessary. The sequence of slab images is used for extracting the motion function. For this purpose, it is not needed to have images of diagnostic or display quality. It would even be preferred for the slab images to be reconstructed at a lower resolution, because this allows for faster and more efficient calculations.

When the sequence of slab images has been formed, a motion function is extracted 340. To extract the motion function, for each of the slab images in the sequence, the slab image is registered to at least one other slab image in the sequence. The other slab image is separated in the sequence from the slab image by a separation parameter. Each of the slab images in the sequence is registered to at least one other slab image, to obtain at least one difference metric 342. This difference metric can characterize and/or quantify the differences in the anatomy of the subject between the two slab images.

The slab images can be registered by applying an elastic deformation and/or a rigid deformation. Optionally additional techniques such as automated masking or intensity clipping can additionally be used during registration to improve robustness. An elastic deformation can be applied by calculating a deformation vector field. The difference metric can then be determined by analyzing this vector field. A rigid deformation can be a translation and/or rotation. Preferably a rigid deformation is applied. For respiratory motion, even more preferably a rigid registration is applied that is optimized for translation in the anterior-posterior direction. This has the advantage of being more robust and easier to calculate. Difference metrics that can be obtained from a rigid deformation are, for example, the amount of rotation, angle of rotation, amount of translation, direction of translation, or a combination thereof. With these examples, the difference metrics can be a scalar, indicating an amount of change, or a vector, indicating both amount and direction of change. For extracting the motion function, it can be sufficient for the difference metric to be a number representing the amount of movement of the region of interest between the slab images. Having additional information such as direction of movement can also be of interest to the clinician and can therefore provide additional information to support diagnosis or treatment planning.

From the obtained difference metrics for the sequence of slab images, a sequence of difference metrics is selected 344. The motion function is then formed using the selected sequence of difference metrics 346.

The method further comprises identifying at least one trigger point in the motion function 350 to define motion states and grouping the projection image data 360 into the defined motion states. During the grouping process, projection data can be assigned to one or more motion states. In an option, the projection data can be grouped by sorting the data into the motion states. With sorting, the projection data is assigned to the most appropriate, or closest motion state. In an alternative option, projection data can be assigned to one or more of the defined motion states by applying a smooth weighting function. In this approach, a weighting function is calculated based on the defined motion state and applied to the projection data for matching the data to that motion state. The use of such a smooth weighting function has the advantage that the amount of data used for the image reconstruction is minimized while retaining full coverage of the subject as well as timing resolution. Also, using a smooth weighting function allows for smooth transitions between the motion states, thereby avoiding artifacts.

Further, the grouped projection data is reconstructed 370 into a volumetric image of the subject for each of the defined motion states. Together, these volumetric images of the defined motion states form the 4D-CT image.

The CT image reconstruction method 300 according to the invention and as illustrated by the example of Figure 3 can be used to reconstruct the projection image data after all the data has been acquired. However, it is not necessary to complete the image acquisition first before the method can start. In particular, the steps of extracting the motion function from the sequence of slab images 340, identifying at least one trigger point 350 and grouping the projection image data 360 into the defined motion states can take place at least partly simultaneously with receiving the projection image data 310. When sufficient projection data has been acquired and received to form a first portion of data, this portion can be already reconstructed into a volumetric slab image while the next consecutive portion of data is being received and so on. When at least the first two slab images of the sequence are available, extracting the motion function 340 can start. And while the sequence of difference metrics builds, the motion function can also form. As soon as an initial part of the motion function is available, identification of trigger points and grouping of projection data into motion states can start. While the sequence of slab images continues to form, extraction of the motion function and identification of trigger points and grouping of projection data continues until all data has been received and these process steps have been completed.

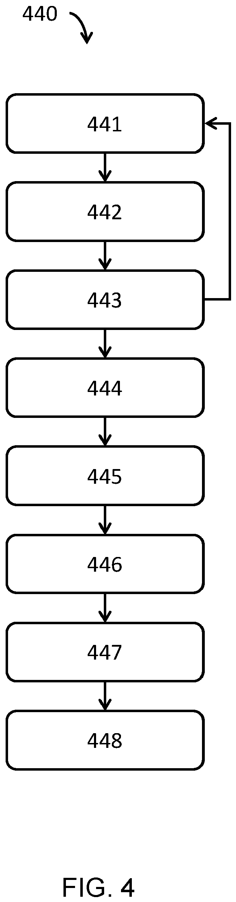

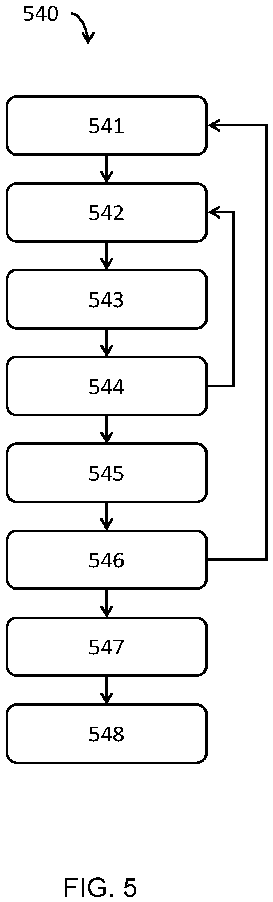

Figures 4 and 5 both schematically illustrate examples of the method steps for extracting a motion function from a sequence of slab images. The embodiments of Figures 4 and 5 show a combination of several optional additional method steps. Although these steps are all illustrated in combination, this is not necessary and merely represents an advantageous option. The optional steps can also be implemented separately or in combinations of two or more.

Figure 4 shows an embodiment for extracting a motion function from a sequence of slab images 440. In this embodiment, the separation parameter has one pre-set value. Having one pre-set value for D enables a fast and robust calculation of a sequence of differenced metrics from the sequence of slab images.

In this example, the difference metrics are calculated iteratively in sequence according to the sequence of the slabs. The method starts by registering slab image S_{1+D} to the first image S₁ 441, From the registration output, a difference metric is calculated 442. In this embodiment a rigid registration is applied, and the difference metric is the shift of the anatomy of interest. For example, the motion signal may be extracted for respiratory motion. When the diaphragm moves upwards, the difference metric will be a positive number indicative of the size of the movement, and when the diaphragm moves downward, the difference metric will be a negative number indicative of the size of the movement. In this way both amount and direction of movement can be captured.

After the difference metric has been calculated for current slab Sᵢ, the method moves on to the next slab Sᵢ₊₁ 443, ad returns to registering it to the slab separated from it by D in the sequence 441, calculating the difference metric 442 and so on. When the final slab has been registered, a single sequence of numbers has been calculated and this is automatically selected as the sequence of difference metrics 444.

Next, the motion function is formed using the sequence of difference metrics. In this example, the option is used to analyze and correct the motion function for outliers.

From the sequence of difference metrics, an initial motion function is formed 445. The initial motion function can be the same as the sequence of difference metrics. Alternatively, some mathematical operations can be applied to the sequence of difference metrics to form the initial motion function such as subtracting a mean value, interpolating additional data points, integrating the sequence, and/or applying a smoothing filter. Outliers in patient motion can be caused by a sudden large irregular motion such as coughing. The initial motion function is analyzed to identify the presence of any such deviations 446. If outliers are identified, the corresponding difference metrics are removed from the sequence to correct for these 447. Although not shown here, it is also advantageous to remove the portions of projection data of the corresponding slab images from the final CT image reconstruction. This will improve image quality.

With the corrected sequence of difference metrics, the motion function is formed 448. The motion function can be formed in a similar manner as described for the initial motion function above. In addition, also a periodic function can be fitted to the sequence of difference metrics to form the motion function. Fitting such a function to the corrected sequence provides a smoother and more robust motion function. Alternatively, the outliers can be removed directly from the initial motion function to form the motion function.

Figure 5 shows another embodiment for extracting a motion function from a sequence of slab images 540. In this embodiment, the separation parameter has two or more pre-set values. Using multiple values for D has the advantage that robustness of the calculations is increased. It also has the advantage that extraction of the motion function can be adapted when an artifact is present in one of the slab images or when the motion pattern of the subject changes during image acquisition.

First, a value for D is set 541. Then, in this example, in the same manner as described for the example illustrated in Figure 4, the difference metrics are calculated iteratively in sequence according to the sequence of the slabs. Slab image S_{i+D} is registered to the current image Sᵢ 542, the difference metric is calculated 543, and the next slab is selected 544. The steps are repeated until the final slab image has been reached. This iterative process results in a sequence of difference metrics for the set value of D 545. When the sequence of difference metrics is complete, the next value for the separation parameter is selected 546 and the process is repeated. This is again repeated until a sequence of difference metrics has been obtained for each value of D.

In an alternative option, the iteration loops can be reversed. Each slab image S_{i+D} is registered to the current image Sᵢ 542 for the each of the values for D, the difference metric is calculated 543, and the next slab is selected 544 and the process repeated until the final slab has been reached.

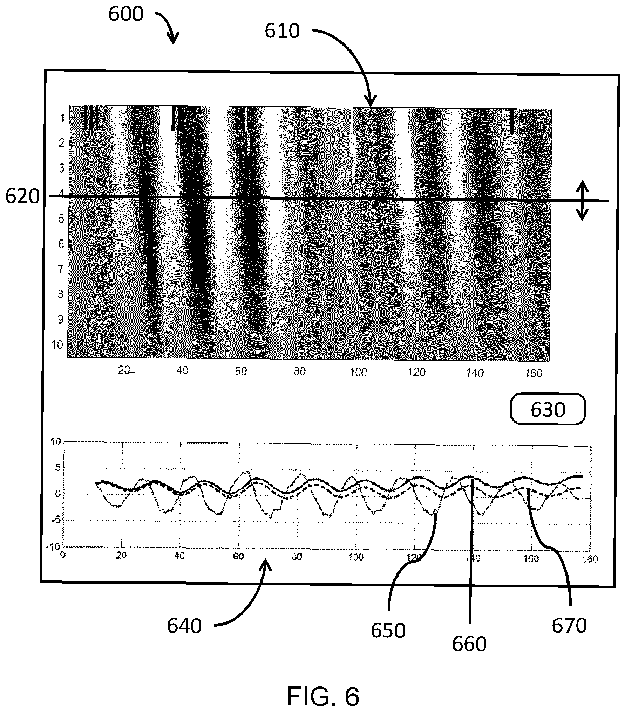

Next, the sequence of difference metrics 547 that will be used to form the motion function 548 is selected. The one or more values for D can be selected by a user, for example using the interface illustrated in Figure 6, but can also be selected automatically.

Alternatively, the sequence of difference metrics can be selected using majority voting for several values of the separation parameter. For example, five consecutive values for D can be used such as 1, 2, 3, 4 and 5. Each value of D will result in its own sequence of difference metrics. The sequences will be similar enough in shape to allow for overlaying them onto one selected sequence. Overlaying will also include and appropriate shift for the sequences to match. This can, for example, be the first sequence, here for D=1 or a middle sequence, here for D=3. When all overlayed values are close for a certain slab image in the sequence, all will be averaged to provide the selected value for the difference metric for that position in the sequence. In case one of the slab images is corrupted, or has an artifact, this can cause an outlier or an absence of data. While the outlier will be present in all sequences, it will occur at a different position in each. The sequence with the value for D that has the outlier will be ignored and the other values will be averaged to provide the selected value for the difference metric. In this manner, forming the motion function also comprises automatically analyzing and correcting for outliers.

When the sequence of difference metrics has been established 547, the motion function is formed from this sequence 548. In this example, the motion function is formed by fitting a periodic function to this sequence of difference metrics, in particular the function cos^4(x), where x corresponds to sequence position number. This function is fit for a human breathing pattern.

Figure 6 schematically illustrates an example of a user interface which is configured to allow a user to select at least one value for the separation parameter. The user interface is configured to display the obtained difference metrics calculated for at least one value of D. In this example, the difference metrics are displayed as a difference metric plot 610. The horizontal axis of the plot shows the slab number. In this example, 180 slab images are selected and reconstructed. The vertical axis of the plot shows the value for D, increasing from 1 at the top to a value of 10 at the bottom. Difference metric plot 610 shows in gray scale values of the difference metric. More advantageously than grayscale, a color coding can be used for the difference metric plot 610.

The difference metrics plot 610 is overlayed with a separation parameter selector 620. In this example, the separation parameter selector is a straight horizontal line which allows the user to select a single value by moving the selector up and down. Alternatively, the user could be allowed to draw an angled or curved line to select multiple values for D. When the separation parameter selector 620 is placed to the satisfaction of the user, confirmation button 630 is used to select the sequence of difference metrics accordingly.

In a further option, the selector 620 can have two straight horizontal lines or a rectangular box to select a smaller sub-range of values for D. This range could then be used to apply the majority voting scheme as described in relation to Figure 5 to compose the sequence of difference metrics.

In addition to the difference metrics plot 610, the user interface 600 also displays a motion function plot 640. The motion function plot visualized the selected sequence of difference metrics 650 and two possible motion functions 660 and 670 as a function of slab image number in the sequence. In an advantageous option, the sequence of different metrics is displayed in real-time as the parameter selector 620 moves across the difference metrics plot. This can help the user in selecting the optimal sequence of metrics. The confirmation button can be used to confirm the selection for forming the motion function. In the example of Figure 6, two options for forming a motion function are displayed in addition to the sequence of metrics 650. In a first option 660, shown by a solid line, the motion function is formed by integrating the sequence of difference metrics. In a second option 670, shown by a dashed line, the motion function is formed by integrating the sequence of difference metrics and subtracting a mean value. Both options allow for easy identification of trigger points corresponding to the breathing phases of the subject.

Any of the method steps disclosed herein, may be recorded in the form of a computer program comprising instructions which when executed on a processor cause the processor to carry out such method steps. The instructions may be stored on a computer program product. The computer program product may be provided by dedicated hardware as well as hardware capable of executing software in association with appropriate software. When provided by a processor, the functions can be provided by a single dedicated processor, by a single shared processor, or by a plurality of individual processors, some of which can be shared. Furthermore, embodiments of the present invention can take the form of a computer program product accessible from a computer-usable or computer-readable storage medium providing program code for use by or in connection with a computer or any instruction execution system. For the purposes of this description, a computer-usable or computer readable storage medium can be any apparatus that may include, store, communicate, propagate, or transport the program for use by or in connection with the instruction execution system, apparatus, or device. The medium can be an electronic, magnetic, optical, electromagnetic, infrared, or semiconductor system, or apparatus or device, or a propagation medium. Examples of a computer-readable medium include a semiconductor or solid-state memory, magnetic tape, a removable computer diskette, a random-access memory "RAM", a read-only memory "ROM", a rigid magnetic disk and an optical disk. Current examples of optical disks include compact disk - read only memory "CD-ROM", compact disk - read/write "CD-R/W", Blu-Ray^{™} and DVD. Examples of a propagation medium are the Internet or other wired or wireless telecommunication systems.

Variations to the disclosed embodiments can be understood and effected by those skilled in the art in practicing the claimed invention, from a study of the drawings, the disclosure, and the appended claims. It is noted that the various embodiments may be combined to achieve further advantageous effects.

In the claims, the word "comprising" does not exclude other elements or steps, and the indefinite article "a" or "an" does not exclude a plurality.

A single unit or device may fulfill the functions of several items recited in the claims. The mere fact that certain measures are recited in mutually different dependent claims does not indicate that a combination of these measures cannot be used to advantage.

Any reference signs in the claims should not be construed as limiting the scope.

## Claims

1. A method for reconstructing a computed tomography image (300) of a subject, the method comprising:
- receiving projection image data (310) of the subject;
- selecting consecutive portions of the projection image data (320);
- reconstructing each of the selected portions into a volumetric slab image to form a sequence of slab images (330);
- extracting a motion function (340, 440, 540) from the sequence of slab images by:
- for each of the slab images in the sequence, registering the slab image to at least one other slab image separated in the sequence from the slab image by a separation parameter (D) to obtain at least one difference metric (342, 442, 543);
- selecting a sequence of difference metrics (344, 444, 547) from the obtained difference metrics for the sequence of slab images; and
- forming a motion function (346, 448, 548) using the selected sequence of difference metrics;
the method further comprising:
- identifying at least one trigger point in the motion function (350) to define motion states;
- grouping the projection image data (360) into the defined motion states; and
- reconstructing the grouped projection data (370) into a volumetric image of the subject for each defined motion state.

2. The method according to claim 1, wherein extracting the motion function from the sequence of slab images (340, 440, 540), identifying the at least one trigger point (350) and grouping the projection image data (360) into the defined motion states takes place at least partly simultaneously with receiving the projection data (320).

3. The method according to claim 1 or 2, wherein the volumetric slab images are reconstructed at a lower resolution than the volumetric images for the motion states.

4. The method according to any of claims 1-3, wherein the motion function is formed by fitting a periodic function to the selected sequence of difference metrics.

5. The method according to any of claim 1-3, wherein forming the motion function comprises analyzing and correcting for outliers (445, 446, 447, 448. 547, 548).

6. The method according to any of claims 1-5, wherein the separation parameter (D) has at least one pre-set value.

7. The method according to claim 6, wherein the separation parameter (D) has two or more pre-set values, and the sequence of difference metrics is selected using majority voting (547).

8. The method according to any of claims 1-7, wherein the registering the slab images comprises applying one or more of: an elastic deformation, and a rigid deformation.

9. The method according to any of claims 1-8, wherein the difference metric indicates the amount and/or direction of movement of a region of interest.

10. The method according to any of claims 1-9, wherein the projection image data of the subject is received from one or more of: a computed tomography imaging apparatus, an imaging data storage device, and database such as a dedicated imaging data storage database, hospital database or patient record database.

11. A system for reconstructing a computed tomography image (130) of a subject, comprising:
- an input (132) configured to receive projection image data (120) of the subject;
- a slab image reconstructor (134), which is configured to:
- select consecutive portions of the projection image data;
- reconstruct each of the selected portions into a volumetric slab image to form a sequence of slab images;
- a motion function extraction unit (136), which is configured to:
- for each of the slab images in the sequence, register the slab image to at least one other slab image separated in the sequence from the slab image by a separation parameter (D) to obtain at least one difference metric;
- select a sequence of difference metrics from the obtained difference metrics for the sequence of slab images; and
- form a motion function using the selected sequence of difference metrics; the system further comprising
- a reconstruction processor (136), which is configured to:
- identify at least one trigger point in the motion function to define motion states;
- group the projection data into the defined motion states; and
- reconstruct the grouped projection data into a volumetric image of the subject for each defined motion state.

12. The system according to claim 11, further comprising a user interface (600) configured to display the obtained difference metrics (610) calculated for at least one separation parameter (D), and configured to allow a user to select (620, 630) at least one of: a sequence of difference metrics and at least one value for the separation parameter (D).

13. The system according to claim 11 or 12, further comprising a display (140) for displaying at least one volumetric image of the subject.

14. Imaging arrangement (100) for acquiring a computed tomography image of a subject, comprising:
- a computed tomography imaging apparatus (110);
- the system (130) according to of any of claims 11-13 for reconstructing the computed tomography image of the subject.

15. A computer program product comprising instructions for causing a processor to carry out the method according to any of claims 1-10, when the computer program is executed.
